# EUROPÄISCHE PATENTANMELDUNG

(11) **EP 4 465 659 A1**
(43) Veröffentlichungstag der Anmeldung: **20.11.2024**
(21) Anmeldenummer: 23220536.9
(22) Anmeldetag: 28.12.2023
(51) Int. Cl.: H04R 25/00

(54) **VERFAHREN ZUM BETREIBEN EINES HÖRSYSTEMS**

(30) Priorität: 15.05.2023 DE 102023204530
(71) Anmelder: Sivantos Pte. Ltd., Singapore 539775 (SG)
(72) Erfinder: HÖGL, Florian, 91058 Erlangen (DE); ROHRSEITZ, Kristin, 91058 Erlangen (DE)
(74) Vertreter: FDST Patentanwälte

(57) **Zusammenfassung**

Die Erfindung betrifft ein Verfahren zum Betreiben eines Hörsystems mittels eines Netzwerks mit dezentralen Netzwerkknoten, wobei das Hörsystem zumindest ein Hörgerät aufweist, wobei das Hörsystem über zumindest einen dezentralen Netzwerkknoten mit einer Datenwolke verbunden wird, und wobei Daten zwischen dem Hörsystem und der Datenwolke ausgetauscht werden.

## Beschreibung

Die Erfindung betrifft ein Verfahren zum Betreiben eines Hörsystems mittels eines Netzwerks mit dezentralen Netzwerkknoten. Die Erfindung betrifft weiterhin ein Hörsystem und eine Software auf einem Datenträger sowie eine Verwendung des Verfahrens.

Als Hörgerät wird allgemein ein elektronisches Gerät bezeichnet, dass das Hörvermögen einer das Hörgerät tragenden Person (die nachfolgend als "Träger" oder "(Hörgeräte-)Nutzer" bezeichnet ist) unterstützt. Insbesondere bezieht sich die Erfindung auf ein Hörgerät, das dazu eingerichtet sind, einen Hörverlust eines hörgeschädigten Nutzers ganz oder teilweise zu kompensieren. Ein solches Hörgerät wird auch als "Hörhilfegerät" (engl.: Hearing Aid, HA) bezeichnet. Daneben gibt es Hörgeräte, die das Hörvermögen von normalhörenden Nutzern schützen oder verbessern, zum Beispiel in komplexen Hörsituationen ein verbessertes Sprachverständnis ermöglichen sollen. Solche Geräte werden auch als "Personal Sound Amplification Products" (kurz: PSAP) bezeichnet. Schließlich fallen unter den Begriff "Hörgerät" in dem hier verwendeten Sinn auch auf oder in dem Ohr getragene Kopfhörer (drahtgebunden oder drahtlos sowie mit oder ohne aktiver Störschallunterdrückung), Headsets, etc. sowie implantierbare Hörgeräte, wie beispielsweise Cochlear-Implantate und Geräte zur Behandlung oder zur Anwendung bei einem Tinnitus.

Hörgeräte im Allgemeinen, und Hörhilfegeräte im Speziellen, sind meist dazu ausgebildet, am Kopf und hier insbesondere in oder an einem Ohr des Nutzers getragen zu werden, insbesondere als Hinter-dem-Ohr-Geräte (engl.: behind the ear, BTE) oder In-dem-Ohr-Geräte (engl.: in the ear, ITE). Im Hinblick auf ihre interne Struktur weisen Hörgeräte regelmäßig mindestens einen Ausgangswandler auf, der ein zum Zweck der Ausgabe zugeführtes Ausgangs-Audiosignal in ein für den Nutzer als Schall wahrnehmbares Signal umwandelt, und letzteres an den Nutzer ausgibt.

In den meisten Fällen ist der Ausgangswandler als elektro-akustischer Wandler ausgebildet, der das (elektrische) Ausgangs-Audiosignal in einen Luftschall umwandelt, wobei dieser ausgegebene Luftschall in den Gehörgang des Nutzers abgegeben wird. Bei einem hinter dem Ohr getragenen Hörgerät ist der auch als "Hörer" ("Receiver") bezeichnete Ausgangswandler meist außerhalb des Ohrs in einem Gehäuse des Hörgeräts integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörgeräte werden nach der englischen Bezeichnung "Receiver In Channel" auch als RIC-Geräte bezeichnet. Im Ohr getragene Hörgeräte, welche so klein dimensioniert sind, dass sie nach außen über den Gehörgang nicht hinausstehen, werden (nach dem englischen Begriff "Completely in Canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörgeräte, insbesondere Cochlear-Implantate, und Hörgeräte, deren Ausgangswandler den Hörnerv des Nutzers direkt stimulieren.

Zusätzlich zu dem Ausgangswandler weist ein Hörgerät häufig mindestens einen (akusto-elektrischen) Eingangswandler auf. Im Betrieb des Hörgeräts nimmt der oder jeder Eingangswandler einen Luftschall aus der Umgebung des Hörgeräts auf, und wandelt diesen Luftschall in ein Eingangs-Audiosignal (d.h. ein elektrisches Signal, das eine Information über den Umgebungsschall transportiert) um. Dieses - auch als "aufgenommenes Schallsignal" bezeichnete - Eingangs-Audiosignal wird regelmäßig in ursprünglicher oder verarbeiteter Form an den Nutzer selbst ausgegeben, z.B. zur Realisierung eines sogenannten Transparenzmodus bei einem Kopfhörer, zur aktiven Störschallunterdrückung oder - z. B. bei einem Hörhilfegerät - zur Erzielung einer verbesserten Geräuschwahrnehmung des Nutzers.

Zudem weist ein Hörgerät häufig eine Signalverarbeitungseinheit (Signalprozessor) auf. In der Signalverarbeitungseinheit wird das oder jedes Eingangs-Audiosignal verarbeitet (d. h. hinsichtlich seiner Schallinformation modifiziert). Die Signalverarbeitungseinheit gibt dabei ein entsprechend verarbeitetes Audiosignal (auch als "Ausgangs-Audiosignal" oder "modifiziertes Schallsignal" bezeichnet) an den Ausgangswandler und/oder an ein externes Gerät aus.

Der Begriff "Hörvorrichtung" oder "Hörsystem" bezeichnet ein einzelnes Gerät oder eine Gruppe von Geräten und ggf. nicht-körperlichen Funktionseinheiten, die zusammen im Betrieb Funktionen für den Nutzer bereitstellen. Die Hörvorrichtung kann im einfachsten Fall aus einem einzelnen Hörgerät bestehen. Alternativ hierzu kann die Hörvorrichtung zwei zusammenwirkende Hörgeräte zur Versorgung der beiden Ohren des Nutzers umfassen. In diesem Fall wird von einem "binauralen Hörsystem" oder "binauralen Hörgerät" gesprochen.

Hörgeräte bieten verschiedene zusätzliche (Hör-/Hörgeräte-)Funktionen, zum Beispiel im Bereich der Signalverarbeitung, welche einen Hörnutzen für einen Hörgerätenutzer (engl.: Hearing Aid Wearer, HAW) verbessern können. Beispiele für solche Funktionen könnten sein: Erkennung der eigenen Stimme (engl.: Own Voice Detection, OVD), Aktive Störgeräuschunterdrückung (engl.: Active Noise Reduction, ANR), Aktive Okklusionsunterdrückung (engl.: Active Occlusion Reduction, AOR); Streaming von Audioinformationen (z.B. Musik), Erkennung von unterschiedlichen Körpersignalen (z.B. Fitness); Erkennung von bestimmten Ereignissen und Reaktionen darauf (z.B. Sturzerkennung - wenn ein Benutzer hinfällt, wird ein Alarm gesendet), usw. Derartige Funktionen sind hierbei häufig als Software oder Verarbeitungsalgorithmen der Signalverarbeitungseinrichtung ausgeführt. Bislang mussten die Nutzer ein kostenintensives Hörgerät kaufen, um solche Funktionen nutzen zu können. Alternativ ist es heutzutage auch möglich, dass sich ein Nutzer solche Funktionen auch nachträglich für die Nutzung seines Hörgeräts dazu kauft oder für eine bestimmte Zeit abonniert. Die Hörgerätefunktionen werden somit als optionale und separate Dienstleistung verkauft. Dies ist auch als Hören als Dienst oder Hören als Dienstleistung (engl.: Hearing as a Service, HaaS) bezeichnet. Durch ein solches Hören als Dienstleistung ist es für einen Nutzer möglich, lediglich diejenigen Funktionen auszuwählen, welche er auch wirklich nutzen will. Der Nutzer kann also individuell zwischen verschiedenen Funktionen der Hörgeräte wählen. Das Aktivieren oder Abonnieren von solchen Funktionen kann beispielsweise über eine Smartphone-App des Hörgerätenutzers erfolgen.

Für aus der Ferne verwaltete Hörgeräte (Hören als Dienstleistung) oder nicht-kontinuierliche Dienstleistungen (wie Funktionen auf Anfrage oder basierend auf zeitlich begrenzten Lizenzen) besteht ein Bedarf an Optionen zum "Ausschalten" (Herunterfahren, Deaktivieren) und "Wiedereinschalten" (Einschalten, Aktivieren) von Hörgeräten oder einzelnen Funktionen aus der Ferne ohne einen Besuch oder eine andere physische Interaktion des Hörgeräteträgers mit einem Gesundheitsexperten (engl.: Health Care Professional, HCP) oder einer aktiven Benutzung einer Smartphone-App. Insbesondere sollten solche Abschalt- und Wiedereinschaltoptionen unabhängig von der Compliance des Hörgerätenutzers sein, z.B. um Betrug, Unbeweglichkeit oder "Ghosting" (d.h. Nichterscheinen zu einem vereinbarten Termin) zu verhindern.

Weiterhin ist eine Interaktion aus der Ferne und der vom Hörgerätenutzer unabhängige Zugriff wünschenswert, wenn der Hörgerätehersteller mit dem Hörgerät interagieren möchte, unabhängig davon, ob der Hörgerätenutzer die App installiert hat oder den Gesundheitsexperten besucht.

Dies ist beispielsweise für die folgenden (Anwendungs-)Szenarien (Use Case) gewünscht:
- Szenario "Altenheim": mit dem Smartphone der Pflegekraft (statt mit dem Smartphone des jeweiligen Bewohners) prüfen, ob die Hörgeräte der Bewohner einwandfrei funktionieren ("Massencheck"), z.B. ob die Hörgeräte genügend Strom haben, einwandfrei funktionieren, die Ausstattung optimieren, Firmware (FW) austauschen, den TV-Streamer einstellen, ... ;
- Szenario "Broadcasting": ein Netzwerk nutzen, um wichtige Informationen an die Hörgerätenutzer in der Umgebung zu senden
- Szenario "Suche nach Hörgeräten": z.B. in einem Altersheim das Smartphone am Eingang der Waschküche platzieren und scannen, ob zufällig Hörgeräte in der Waschküche sind;
- Szenario "Uhrzeit und Datum im Hörgerät aktualisieren": Da Hörgeräte regelmäßig keine eingebauten Uhren haben, sondern lediglich eine ungefähre Zeitbestimmung, könnte dem Hörgerät immer dann Informationen über Uhrzeit und Datum übermittelt werden, wenn das Hörgerät in der Nähe eines Smartphones ist;
- Szenario "Daten aus dem Hörgerät auslesen": Hörgeräte haben lediglich einen begrenzten Speicherplatz z.B. für protokollierte Nutzungsdaten. Es wäre von Vorteil, wenn die protokollierten Daten häufiger ausgelesen werden könnten, so dass der Hörgerätehersteller die protokollierten Daten schneller und mit besserer Genauigkeit zurückerhält. Somit könnte der Hörgerätehersteller z. B. den "Gesundheitszustand der Batterie" auslesen und den Hörgerätenutzer daran erinnern, einen neuen Akku zu besorgen oder eine "Heilungsladung" durchzuführen. Anderer Anwendungsfall: ein Helfer liest eHealth-bezogene Daten aus dem Hörgerät einer behinderten/älteren Person aus
- Szenario "Hörgeräte-Abo": das Hörgerät erhält stets die neuesten und besten Funktionen und Updates
- Szenario "Mass FW Exchange": z.B. während der Produktion oder beim Gesundheitsexperten, um die Firmware mehrerer Hörgeräte auf einmal zu aktualisieren
- Szenario "Verlorene Personen finden": eine Person mit Hörgerät verläuft sich, und kann bei einem Vorübergehen an einem Endpunkt registriert werden.

Der Erfindung liegt die Aufgabe zugrunde, ein besonders geeignetes Verfahren zum Betreiben eines Hörsystems anzugeben. Insbesondere soll ein einfacher und zuverlässiger Fernzugriff und Änderung des Hörgerätestatus, unabhängig von der Compliance des Hörgerätenutzers bereitgestellt werden. Der Erfindung liegt weiterhin die Aufgabe zugrunde, ein besonders geeignetes Hörsystem und eine besonders geeignete Software sowie eine besonders geeignete Verwendung des Verfahrens anzugeben.

Hinsichtlich des Verfahrens wird die Aufgabe mit den Merkmalen des Anspruchs 1 und hinsichtlich des Hörsystems mit den Merkmalen des Anspruchs 9 sowie hinsichtlich der Software mit den Merkmalen des Anspruchs 10 und hinsichtlich der Verwendung mit den Merkmalen des Anspruchs 11 erfindungsgemäß gelöst. Die im Hinblick auf das Verfahren angeführten Vorteile und Ausgestaltungen sind sinngemäß auch auf das Hörsystem und/oder die Software und/oder die Verwendung übertragbar und umgekehrt.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Das erfindungsgemäße Verfahren ist zum Betreiben eines Hörsystems mittels eines Netzwerks mit dezentralen Netzwerkknoten vorgesehen sowie dafür geeignet und eingerichtet. Mit anderen Worten ist verfahrensgemäß ein Netzwerk mit einer Anzahl von dezentralen Netzwerkknoten vorgesehen. Das Netzwerk weist also mindestens einen dezentralen Netzwerkknoten auf. Vorzugsweise sind jedoch eine Vielzahl von dezentralen Netzwerkknoten vorgesehen. Das Netzwerk weist vorzugsweise eine Datenwolke auf, mit welcher die dezentralen Netzwerkknoten gekoppelt oder koppelbar sind.

Unter einer Datenwolke (Rechenwolke), auch Cloud oder Cloud Computing genannt, wird hier und im Folgenden insbesondere ein Modell verstanden, welches bei Bedarf - meist über das Internet und geräteunabhängig - zeitnah und mit wenig Aufwand geteilte Computerressourcen als Dienstleistung, etwa in Form von Servern, Datenspeichern oder Applikationen, bereitstellt. Angebot und Nutzung dieser Computerressourcen ist definiert und erfolgt in der Regel über eine Programmierschnittstelle beziehungsweise für Anwender über eine Website oder ein Programm (bspw. App).

Das Hörsystem weist vorzugsweise ein Hörgerät, insbesondere ein Hörhilfegerät (engl.: Hearing Aid, HA), auf, welches an oder in einem Ohr eines Benutzers (Hörsystemnutzer), tragbar ist. Das Hörsystem beziehungsweise das Hörgerät ist dazu vorgesehen und eingerichtet, eine drahtlose Signalverbindung zu einem Netzwerk oder dezentralen Netzwerkknoten herzustellen, und Daten über eine solche Signal- oder Kommunikationsverbindung zu übertragen und zu empfangen.

Verfahrensgemäß startet das Hörsystem automatisch, also ohne ein Zutun eines Benutzers, eine Suche nach einem dezentralen Netzwerkknoten. Mit anderen Worten versucht das Hörsystem verfahrensgemäß sich automatisch mit dem Netzwerk zu verbinden. Eine Suche wird beispielsweise automatisch nach einer vorgegebenen Zeitdauer (z.B. 30 s) beendet, wenn von dem Hörsystem kein Netzwerk oder Netzwerkknoten in der Umgebung erfassbar ist. Das Hörsystem versucht also einen Pairing-Prozess mit einem Netzwerk oder Netzwerkknoten durchzuführen. Hierbei ist es beispielsweise ebenfalls denkbar, dass die Netzwerkknoten aktiv nach einem Hörsystem (z.B. einer Bluetooth-Kennung) suchen.

Wenn im Zuge der Suche zumindest ein dezentraler Netzwerkknoten des Netzwerks gefunden wird, wird das Hörsystem automatisch mit dem Netzwerk beziehungsweise mit dem mindestens einen Netzwerkknoten verbunden (Pairing). Anschließend wird automatisch ein (vorzugsweise verschlüsselter) Datenaustausch zwischen dem Hörsystem und dem Netzwerk beziehungsweise dem mindestens einen Netzwerkknoten durchgeführt.

Unter einem Datenaustausch ist hierbei insbesondere ein bidirektionaler Austausch von Daten, also eine bidirektionale Datenübertragung, zwischen dem Hörsystem und dem Netzwerk beziehungsweise dem dezentralen Netzwerkknoten zu verstehen. Es sind jedoch auch unidirektionale Datenübertragungen vom Hörsystem zum Netzwerk(-knoten) oder umgekehrt möglich.

Das Hörsystem übermittelt hierbei insbesondere Identifikationsdaten (Authentifizierungsdaten) an das Netzwerk. Unter "Identifikationsdaten" sind hierbei insbesondere Daten zur Identifikation des (spezifischen) Hörsystems, beispielsweise eine Identifikationsnummer oder eine (digitale) Seriennummer zu verstehen. Unter "Identifikationsdaten" sind weiterhin auch situationsspezifische Identifikationen zu verstehen (z.B. bei einem Betreten eines neuen Netzwerks, beispielsweise in einem Bahnhof), welche auch unter Berücksichtigung von (Meta-)Daten aus der Datenwolke des Netzwerks ausgewertet werden.

Beispielsweise ist es denkbar, dass in dem Netzwerk oder in der Datenwolke verschiedene Identifikationsgruppen hinterlegt sind, wobei bestimmt wird, ob die Identifikationsdaten des Hörsystems einer Identifikationsgruppe zuordenbar sind, wobei in Abhängigkeit der Zuordenbarkeit Daten vom Netzwerk(knoten) an das Hörsystem übertragen werden.

Beispielsweise sind hierbei drei Arten von Identifikationsgruppen denkbar: Allgemein, Hörsystemspezifisch, und Gruppen von Hörsystemen. Unter "Allgemein" würden beispielsweise alle Hörsysteme und Hörgeräte eines oder mehrerer Herstellers) fallen, beispielsweise im Rahmen eines Sicherheitsupdates oder eines Warnhinweises. Die Gruppe "Hörsystemspezifisch" wäre beispielsweise spezifisch für das Einzelgerät des Hörsystems, also beispielsweise eine Zugangs- oder Nutzungsberechtigung für eine HaaS-Funktion oder einen HaaS-Dienst des Hörsystems. Die "Gruppen von Hörsystemen" beträfe beispielsweise alle Hörsysteme mit einer gewissen Hörgeräte-Plattform/Software, einer bestimmten Bauart oder einer bestimmten Marke.

Das Netzwerk beziehungsweise der Netzwerkknoten übermitteln in Abhängigkeit der Identifikationsdaten Daten an das Hörsystem. Für den Datenaustausch oder die Datenübertragung zwischen dem dezentralen Netzwerkknoten und dem Hörsystem ist es beispielsweise denkbar, dass Audiodaten vom Netzwerk an das Hörsystem übertragen werden, beispielsweise für eine Katastrophenwarnung (z.B. "Notfall - Hochwasser"). Weiterhin können von dem Netzwerk(knoten) Kommandos, also Steuerbefehle, an das Hörsystem übertragen werden, um bestimmte Hörsystem-Funktionen zu steuern (zu aktivieren, zu deaktivieren, ...). Die übertragenen Daten können auch Datenpakete oder Binaries sein, beispielsweise im Rahmen eines Firmware-Updates des Hörsystems.

Verfahrensgemäß wird das Hörsystem über zumindest einen dezentralen Netzwerkknoten beispielsweise mit einer Datenwolke des Netzwerks verbunden, wobei Daten zwischen dem Hörsystem und der Datenwolke ausgetauscht werden können.

Erfindungsgemäß wird also ein Netzwerk aus dezentralen Netzwerkknoten (z.B. Smartphones, Router, etc., auf denen eine Netzwerkknoten-App installiert ist) bereitgestellt, dessen dezentrale Endpunkte beispielsweise mit einer Datenwolke (Cloud) und dem Hörsystem verbunden sind. Es wird also ein dezentrales Netzwerk für die Hörsystem-Ferninteraktion und Datenübertragung verwendet. Dabei wird vorzugsweise ein Hörsystem mit einer Vielzahl von dezentralen Netzwerkknoten verbunden. Diese dezentralen Netzwerkknoten übertragen Daten vom Hörsystem zur Datenwolke und umgekehrt. Dies ermöglicht ein einfaches "Ausschalten" oder "Wiederbeleben" von Geräten ohne zusätzliche eingebaute Uhr oder andere Datenerfassungsschaltungen innerhalb des Hörsystems, wodurch zeitgebundene und ferngesteuerte Dienste (HaaS, Standortverfolgung usw.) möglich werden.

Bei einer ausreichenden Kapazität des Netzwerks ist es weiterhin möglich, mehr Daten zu übertragen, so dass andere Anwendungen wie beispielsweise Fehler- und Fehlfunktionsberichte des Hörgeräts, automatischer Austausch oder Firmware-Update realisiert werden können. In der Datenwolke können verschiedene Profile für Dienste und Datenzugriff über das Remote-Netzwerk ermöglicht werden, z.B. ein Hausmeistermodus (Pflegeheim - Status auslesen, LED & Batterie Check, ...).

Das Verfahren geht dabei von der Überlegung aus, dass moderne Bedien- und Anzeigegeräte, wie insbesondere Smartphones oder Tabletcomputer, in der heutigen Gesellschaft weit verbreitet sind und somit als dezentrale Netzwerkknoten generell jederzeit verfügbar und zugänglich sind. Insbesondere befindet sich der Benutzer des Hörsystems mit großer Wahrscheinlichkeit stets in der Nähe eines derartigen dezentralen Netzwerkknotens. Gemäß dem Verfahren ist somit auch ein Aufbau eines Netzwerks für den Fernzugriff und die Änderung des Hörgerätestatus in abgelegenen Gebieten ohne HCP-Netzwerk oder mit schlechter Internetverbindung möglich. Das Hörsystem beziehungsweise das Hörgerät benötigt somit keine extra eingebaute Uhr oder andere Operationen innerhalb des Hörgeräts, wodurch dessen Effizienz erhöht wird (Optimierung von Speicherplatz und Größe).

Erfindungsgemäß wird ein Netzwerk aufgebaut, das aus verschiedenen mobilen Endpunkten (dezentrale Netzwerkknoten) besteht, z. B. Smartphones auf dem Markt/der Welt, die eine (insbesondere drahtlose) Verbindung herstellen können (Bluetooth, BLE-A, Wifi, ...). Diese Endpunkte suchen automatisch nach Hörgeräten und stellen eine Verbindung zu ihnen her, um sie anhand einer im Hörgerät hinterlegten Identifikation (engl.: Hearing Aid Identification, HA-ID) zu identifizieren und Daten zu übermitteln (z. B. Befehle zum "Ausschalten"/"Wiederbeleben" von Hörgeräten, Auslesen von Daten, vorbeugende Wartung).

Hierbei ist beispielsweise ein Belohnungsprogramm für diejenigen möglich, welche entsprechende Netzwerkknoten-Apps auf ihren Smartphones geöffnet haben und damit als mobile Endpunkte fungieren. Diese mobilen Endpunkte könnten sogar ihre GPS-Position und weitere Erkenntnisse aus den Sensoren (Zeit, Datum, Ausrichtung, Entfernung, ...) übermitteln, wenn ein bestimmtes Hörsystem oder Hörgerät erkannt wurde.

Auf den Smartphones sind Apps (kann auch im Hintergrund einer Drittanbieter-App wie Apple Health laufen) installiert, die mit einer Datenbank der Datenwolke verbunden sind, in der alle Identifikationen (IDs) und der Status des Hörsystems oder Hörgeräts (z. B. " Ausschalten " oder "Nicht-Ausschalten ") gespeichert sind. Die Verbindung zum Hörgerät verfügt hierbei vorzugsweise über einen Autorisierungsmechanismus, um Änderungen am Hörgerät zu ermöglichen (beispielsweise Blockchain, Verschlüsselung) beziehungsweise nicht befugte Zugriffe und Änderungen zu verhindern.

In einer vorteilhaften Ausführung wird die Verbindung nach dem Datenaustausch zwischen dem Hörsystem und dem mindestens einen dezentralen Netzwerkknoten beendet. Mit anderen Worten wird die Verbindung insbesondere automatisch getrennt, so dass die Batterie des Hörsystems nicht dauerhaft belastet wird. In einer bevorzugten Ausgestaltung werden Daten von der Datenwolke des Netzwerks auf den mindestens einen dezentralen Netzwerkknoten hinterlegt, wobei die Daten im Zuge des Datenaustauschs an das Hörsystem übermittelt werden. Mit anderen Worten ist keine gleichzeitige Verbindung des Hörsystems zu einem Endpunkt und der Datenwolke notwendig. Hierzu werden die benötigten Informationen vorzugsweise im Endpunkt beziehungsweise dem dezentralen Netzwerkknoten (zwischen-)gespeichert, bis die Verbindung zur Datenwolke wiederhergestellt ist (z.B. Offline-Liste der "Ausschalten"-Geräte, die in einer beliebigen App gespeichert ist).

Zusätzlich oder alternativ sind auch stationäre Endpunkte denkbar (z.B. Wäscherei eines Altenpflegeheims, siehe eingangs beschriebene Szenarien; LoRa, oder öffentliche Netzverbindung), um Daten mit Hörgeräten auszutauschen und sie in der Nähe dieses Endpunktes zu lokalisieren.

In einer vorteilhaften Ausbildung werden bei dem Datenaustausch Aktivierungsdaten ausgetauscht, wobei Funktionen des Hörsystems in Abhängigkeit der ausgetauschten Aktivierungsdaten aktiviert oder deaktiviert werden. Unter Aktivierungsdaten sind hierbei insbesondere Zugangs-, Berechtigungs- oder Lizenzdaten im Hinblick auf eine HaaS-Funktion des Hörsystems zu verstehen, über welche die HaaS-Funktion freigegeben (eingeschaltet) oder gesperrt (ausgeschaltet) wird.

In einer geeigneten Weiterbildung werden bei dem Datenaustausch von dem Hörsystem Statusdaten über einen Status an den mindestens einen Netzwerkknoten übertragen. Unter "Statusdaten" sind hierbei beispielsweise Informationen über einen Hörsystemzustand oder einem Zustand einer Hörsystemkomponente zu verstehen. Vorzugsweise werden die Statusdaten von mehreren Hörsystemen in der Datenwolke gesammelt und gemeinsam ausgewertet, wobei die Datenwolke anhand der Auswertung eine Handlungsempfehlung für den Benutzer über die dezentralen Netzwerkknoten an das Hörsystem sendet. Unter einer "Handlungsempfehlung" ist hierbei eine Mittelung oder Nachricht an den Benutzer zu verstehen,

Die Auswertung kann beispielsweise durch eine Cluster-Analyse erfolgen.

Die Handlungsempfehlung kann beispielsweise als eine akustische Nachricht in Form von Audiodaten an das Hörsystem übermittelt und an den Benutzer ausgegeben werden. Ebenso denkbar ist beispielsweise, dass eine entsprechende Handlungsempfehlung an ein Smartphone oder eine Smartphone-App des Benutzers übermittelt wird.

Beispielsweise wird als Statusdaten eine Tragedauer des Hörsystems übermittelt, wobei in Abhängigkeit von der Tragedauer eine Reinigungsaufforderung als Handlungsempfehlung gesendet wird, um beispielsweise das Hörsystem oder das Hörgerät, insbesondere eine Lautsprecheröffnung, von Cerumen zu reinigen. Beispielsweise kann auch ein Zustand einer Hörsystem-Batterie (z.B. State of Health, SOH) übertragen werden, so dass bei einem sich verschlechternden Batteriezustand als Handlungsempfehlung beispielsweise ein Austausch der Batterie oder die Besorgung eines neuen Hörsystems erzeugt werden kann.

Ein zusätzlicher oder weiterer Aspekt der Erfindung sieht vor, dass das Hörsystem die Suche nach einem dezentralen Netzwerkknoten mit einer einstellbaren Wiederholungsfrequenz automatisch wiederholt beziehungsweise neu startet. Nach einer erfolgreichen oder nicht erfolgreichen Verbindung zu einem dezentralen Netzwerkknoten wird also automatisch nach einer einstellbaren Zeitdauer eine erneute Suche beziehungsweise ein erneuter Verbindungsversuch gestartet. Dadurch wird sichergestellt, dass das Hörsystem zuverlässig durch das Netzwerk aktualisiert wird. Das Hörsystem sucht also nicht kontinuierlich, sondern in einem einstellbaren Zeitintervall nach dem Netzwerk, wodurch die Energiereserven des Hörsystems geschont werden.

Die Wiederholungsrate oder die Zeitdauer bis zu einem erneuten Auslösen einer Suche kann beispielsweise in Abhängigkeit einer Situation eingestellt werden. Vorzugsweise wird die Wiederholungsrate in Abhängigkeit einer Verbindungshäufigkeit (bzw. Datenaustauschhäufigkeit) eingestellt. In einer bevorzugten Ausgestaltung wird von dem Hörsystem während des Betriebs ein Maß für die Zeitdauer seit der letzten (erfolgreichen) Verbindung mit einem Netzwerkknoten bestimmt, wobei die Wiederholungsrate in Abhängigkeit dieses Maßes eingestellt wird. Die Wiederholungsrate ist also kurz nach einer erfolgreichen Verbindung unterschiedlich als wenn die letzte erfolgreiche Verbindung schon längere Zeit zurückliegt. Die Wiederholungsrate hängt also davon ab, wie lange eine erfolgreiche Verbindung bereits zurückliegt. Vorzugsweise wird die Wiederholungsrate mit zunehmender Zeitdauer seit der letzten Verbindung erhöht, das Hörsystem versucht also häufiger sich mit einem Netzwerk zu verbinden, wenn die Verbindung schon längere Zeit zurück liegt.

Hörsysteme, insbesondere Hörgeräte oder Hörhilfegeräte, weisen in der Regel keine integrierte Uhr auf. Zur Bestimmung des Maßes ist es daher beispielsweise möglich, dass das Hörsystem zählt, wie oft eine erfolgreiche Verbindung seit dem Einschalten des Hörsystems hergestellt wurde. Zusätzlich oder alternativ kann das Maß beispielsweise auch anhand eines Ladezustands (State of Charge, SOC) einer Hörsystem-Batterie bestimmt werden. Beispielsweise wird hierbei gezählt, wie häufig eine erfolgreiche Verbindung zwischen zwei vorgegebenen Ladezuständen (bspw. 100% und 50%) hergestellt wurden.

In einer weiteren Ausführung wird die Wiederholungsrate in Abhängigkeit eines Tragezustands eingestellt. Beispielsweise sucht das Hörsystem häufiger nach dem Netzwerk beziehungsweise den dezentralen Netzwerkknoten, wenn es vom Benutzer getragen oder verwendet wird. Das Hörsystem ist hierbei dazu geeignet und eingerichtet den Tragezustand zu bestimmen.

Beispielsweise wird der Tragezustand mittels eines Bewegungssensors bestimmt. Wenn der Bewegungssensor Körperbewegungen des Benutzers erfasst, wird dies als Tragezustand "getragen" klassifiziert. Bei einem längeren Ausbleiben von Körperbewegungen, wird beispielsweise als Tragezustand "nicht getragen" bestimmt.

Beispielsweise können Körperbewegungen von dem Hörsystem EEG-basiert (Elektroenzephalographie) erfasst werden, indem beispielsweise Elektroden auf der Oberfläche eines Hörgerätegehäuses angeordnet sind, um die Absicht, Planung oder Ausführung einer Körperbewegung anhand von entsprechenden charakteristischen Strömen zu erfassen. Ebenso denkbar ist beispielsweise eine schallbasierte Bewegungserfassung mittels der Eingangswandler oder Mikrofone des Hörsystems oder Hörgeräts, wobei Geräusche, die von den Gelenken oder der Kleidung des Benutzers ausgehen und auf Bewegungen hinweisen. Solche akustischen Bewegungserfassungen sind beispielsweise aus der CN 112656403 A, US 10062373 B2, JP 5495415 B2, CN 112806981 B, US 9610042 B1, AT 513434 B1, KR 101160227 B1, US 11417307 B2, oder US 20150038850 A1 bekannt. Alternativ ist beispielsweise auch eine EMG-basierte Bewegungsdetektion über einen Elektromyographie-Sensor möglich, der am Körper des Benutzers angebracht ist. Weiterhin ist auch eine IMU-basierte Erfassung durch einen Beschleunigungssensor (Gyroskop) des Hörsystem, oder durch eine Trägheitsmesseinheit, die am Körper oder an einem Kleidungsstück getragen wird oder daran befestigt ist (z. B. Armband oder auch IMU-Sensoren).

Hierbei ist es beispielsweise denkbar, dass wenn der Bewegungssensor einen Sturz des Benutzers detektiert, über das Netzwerk automatisch Hilfe angefragt wird. Beispielsweise werden andere mit dem Netzwerk verbundene Benutzer inform iert.

Das erfindungsgemäße Hörsystem weist zumindest ein Hörgerät auf, in welchem ein mittels eines Eingangswandlers aufgenommenes Audiosignal eines Umgebungsschalls nach Maßgabe einer Vielzahl von Signalverarbeitungsparametern in einer Signalverarbeitungseinheit zur Realisierung von verschiedenen (Hörgeräte-)Funktionen modifiziert wird. Bei dem Eingangswandler handelt es sich insbesondere um einen akusto-elektrischen Wandler, insbesondere ein Mikrofon. Bei dem Audiosignal handelt es sich dabei um ein elektrisches Signal, das eine Information über den aufgenommenen Umgebungsschall transportiert.

Bei dem Hörgerät des Hörsystems handelt es sich in dem bevorzugten Anwendungsfall um ein zur Versorgung von Minderhörenden ausgebildetes Hörgerät. Grundsätzlich ist die Erfindung aber auch auf ein Hörsystem mit einem "Personal Sound Amplification Device" anwendbar. Das Hörinstrument liegt insbesondere in einer der eingangs genannten Bauformen vor, insbesondere als BTE-, RIC-, ITE- oder CIC-Gerät vor. Bei dem Hörinstrument kann es sich ferner auch um eine implantierbare oder vibrotaktile Hörhilfe handeln.

Das Hörsystem weist eine Sucheinheit zur Suche nach einem dezentralen Netzwerkknoten und einen Transceiver zur signaltechnischen Verbindung mit einem dezentralen Netzwerkknoten, und einem Controller (das heißt eine Steuereinheit) auf. Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, mittels der Sucheinheit eine Suche nach einem Netzwerk oder dezentralen Netzwerkknoten zu starten und durchzuführen, und im Falle einer erfolgreichen Suche über den Transceiver eine Signalverbindung zum Netzwerk aufzubauen sowie einen Datenaustausch mit dem Netzwerkknoten durchzuführen.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer- bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC) oder durch einen FPGA (Field Programmable Gate Array), gebildet sein, in dem die Funktionalität zur Durchführung des erfindungsgemäßen Verfahrens mit schaltungstechnischen Mitteln implementiert ist.

Das Hörsystem umfasst beispielsweise eine Ferninteraktionseinheit als dezentralen Netzwerkknoten, welcher im Wesentlichen das vorstehend beschriebene Verfahren netzwerkseitig durchführt. Bei der Ferninteraktionseinheit kann es sich im Rahmen der Erfindung um ein elektronisches Bauteil, z.B. einen ASIC, handeln, in dem die Funktionalität zur Durchführung des Verfahrens schaltungstechnisch (hard-wired) realisiert ist. Vorzugsweise ist die Ferninteraktionseinheit aber durch eine Software-Einheit (also ein Computerprogramm) gebildet. Die Ferninteraktionseinheit kann in einem vom Hörgerät losgelösten Peripheriegerät, z.B. in einem Smartphone oder Router, integriert bzw. implementiert sein. Vorzugsweise ist die Ferninteraktionseinheit in Form einer dem Hörgerät zugeordneten und mit dem Hörgerät interagierenden App ausgebildet, wobei die App bestimmungsgemäß auf einem Smartphone oder anderen Mobilgerät installiert wird. Das Smartphone bzw. Mobilgerät ist in diesem Fall regelmäßig selbst kein Teil des Hörsystems, sondern wird von diesem nur als externe Ressource genutzt.

Der Transceiver kann beispielsweise ein Radiofrequenz- Transceiver (z.B. LoRa, Bluetooth, WiFi, UWB, WLAN) sein. Alternativ kann der Transceiver für die Übertragung von nicht-hörbaren akustischen Signalen (z.B. Ultraschall) ausgeführt sein. Ebenso denkbar ist ein Transceiver für eine Signalübertragung via magnetischer Induktion (z.B. T-Coil, ...) oder über das Mobilfunknetz.

Vorzugsweise weist das Hörgerät zwei Transceiver, einen langreichweitigen Transceiver (z.B. WiFi) und einen kurzreichweitigen Transceiver (z.B. für magnetische Induktion) auf, wobei vorzugsweise zunächst eine Suche nach dem Netzwerk(knoten) mit dem kurzreichweitigen Transceiver durchgeführt wird, und falls diese negativ oder nicht erfolgreich war, eine Suche mit dem langreichweitigen Transceiver durchgeführt wird.

Eine erfindungsgemäße Vorrichtung zur Durchführung des Verfahrens umfasst ein Netzwerk mit der Datenwolke und zumindest einem dezentralen Netzwerkknoten, welcher vorzugsweise automatisch signaltechnisch mit einem Hörsystem koppelbar ist. Die Vorrichtung beziehungsweise das Netzwerk weist hierbei vorzugsweise einen Controller zur Durchführung des Verfahrens auf. Die Vorrichtung ist beispielsweise durch ein vorstehend beschriebenes Hörsystem und eine damit gekoppelte Ferninteraktionseinheit realisiert.

Ein zusätzlicher oder weiterer Aspekt der Erfindung sieht eine Software auf einem Medium oder Datenträger zur Durchführung oder Ausführung des vorstehend beschriebenen Verfahrens vor. Dies bedeutet, dass die Software auf einem Datenträger hinterlegt ist, und zur Ausführung des vorstehend beschriebenen Verfahrens vorgesehen, sowie dafür geeignet und ausgestaltet ist. Dadurch ist eine besonders geeignete Software für den Betrieb eines Hörsystems realisiert, mit welcher die Funktionalität zur Durchführung des erfindungsgemäßen Verfahrens programmtechnisch implementiert wird. Die Software ist somit insbesondere eine Betriebssoftware (Firmware), wobei der Datenträger beispielsweise ein Datenspeicher des Controllers ist. Vorzugsweise ist die Software des Hörsystems in eine hörgeräteseitige Software für die Signalverarbeitungseinrichtung oder den Controller, und in eine Software zur Realisierung einer Ferninteraktionseinheit (netzwerkseitig) aufgeteilt.

Gemäß der erfindungsgemäßen Verwendung wird das vorstehend beschriebene Verfahren zur Lokalisierung des Hörsystems verwendet. Dies ist insbesondere für das eingangs beschriebenen Szenarios "Verlorene Personen finden" vorteilhaft. Vorzugsweise protokolliert das Netzwerk beziehungsweise die Datenwolke die erfolgreichen Verbindungen mit dem Hörsystem, insbesondere mit welchen dezentralen Netzwerkknoten das Hörsystem verbunden war. Das Hörsystem - und somit der Benutzer - kann somit anhand der hinterlegten Daten lokalisiert werden oder zumindest der wahrscheinliche Aufenthaltsbereich eingeschränkt werden.

Nachfolgend ist ein Ausführungsbeispiel der Erfindung anhand einer Zeichnung näher erläutert. Darin zeigen in schematischen und vereinfachten Darstellungen:
- Fig. 1: ein Hörsystem mit einer Ferninteraktionseinheit, und
- Fig. 2: ein Flussdiagramm eines Verfahrens zum Betrieb des Hörsystems.

Einander entsprechende Teile und Größen sind in allen Figuren stets mit den gleichen Bezugszeichen versehen.

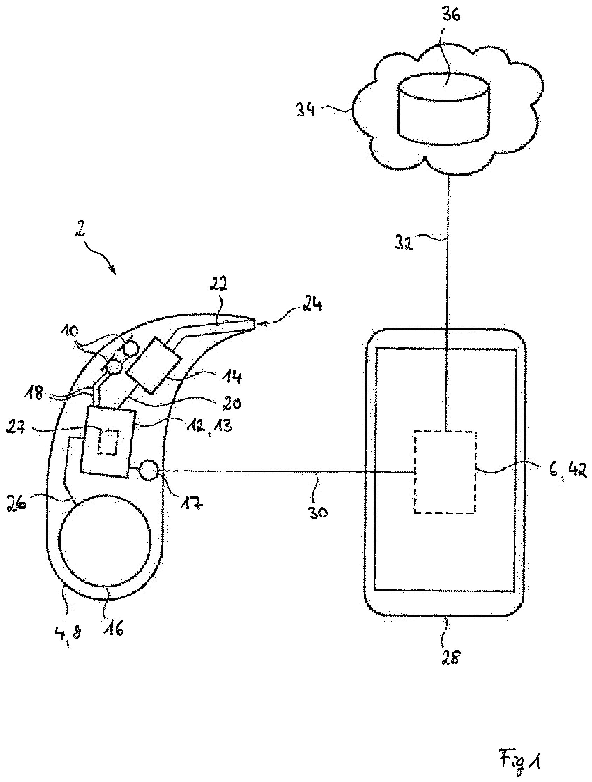

In der Fig. 1 ist in schematischer und vereinfachter Darstellung ein Hörsystem 2 dargestellt, das ein Hörgerät 4 und eine Ferninteraktionseinheit 6 umfasst. Bei dem Hörgerät 4 handelt es sich in dem dargestellten Ausführungsbeispiel beispielhaft um ein BTE-Hörgerät.

Das Hörgerät 4 umfasst ein hinter dem Ohr eines minderhörenden Nutzers zu tragendes (Hörgeräte-)Gehäuse 8, in welchem als Hauptkomponenten zwei Eingangswandler 10 in Form von Mikrofonen, eine Signalverarbeitungseinheit 12 mit einem digitalen Signalprozessor (z.B. in Form eines ASIC) und/oder einem Mikrocontroller als Controller 13, ein Ausgangswandler 14 in Form eines Hörers sowie eine Batterie 16 angeordnet sind. Das Hörgerät 4 umfasst weiterhin einen Transceiver 17 zum insbesondere drahtlosen Austausch von Daten, beispielsweise auf Basis des Bluetooth-Standards.

Im Betrieb des Hörgeräts 4 wird mittels der Eingangswandler 10 ein Umgebungsschall aus der Umgebung des Hörgeräts 4 aufgenommen und als Audiosignal 18 (d.h. als ein die Schallinformation tragendes elektrisches Signal) an die Signalverarbeitungseinheit 12 ausgegeben. Durch die Signalverarbeitungseinheit 12 wird das Audiosignal 18 verarbeitet. Die Signalverarbeitungseinheit 12 umfasst hierzu eine Vielzahl von Signalverarbeitungsfunktionen, unter anderem einen Verstärker, durch den das Audiosignal 18 frequenzabhängig verstärkt wird, um die Hörschädigung des Nutzers zu kompensieren.

Die Signalverarbeitungseinheit 12 gibt ein aus dieser Signalverarbeitung resultierendes modifiziertes Audiosignal 20 an den Ausgangswandler 14 aus. Dieser wandelt das modifizierte Audiosignal 20 wiederum in einen Schall um. Dieser (gegenüber dem aufgenommenen Umgebungsschall modifizierte) Schall wird von dem Ausgangswandler 14 zunächst durch einen Schallkanal 22 an eine Spitze 24 des Gehäuses 8, und von dort durch einen (nicht explizit dargestellten) Schallschlauch zu einem in das Ohr des Nutzers einsetzbaren oder eingesetzten Ohrstück geleitet.

Die Signalverarbeitungseinheit 12 wird aus der Batterie 16 mit elektrischer Energie 26 versorgt.

In der Signalverarbeitungseinheit 12 ist eine Sucheinheit 27 intergriert. Die Sucheinheit 27 ist beispielsweise als eine Software oder Firmware implementiert. Die Sucheinheit 27 wertet im Betrieb Signale des Transceivers 17 aus, und (untersucht, ob sich eine Ferninteraktionseinheit 6 in der Umgebung des Hörgeräts 4 befindet.

Die Ferninteraktionseinheit 6 ist in dem dargestellten Ausführungsbeispiel als Software in Form einer App realisiert, die auf einem Smartphone 28 installiert ist. Das Smartphone 28 kann hierbei ein Smartphone des Hörgerätenutzers sein, das Smartphone 28 kann jedoch auch einer anderen Person gehören. Das Smartphone 28 ist selbst kein Bestandteil des Hörsystems 2 und wird von diesem lediglich als Ressource genutzt. Konkret nutzt die Ferninteraktionseinheit 6 Speicherplatz und Rechenleistung des Smartphones 28 zur Durchführung eines nachfolgend näher beschriebenen Verfahrens zum Betrieb des Hörsystems 2 beziehungsweise des Hörgeräts 4. Weiterhin nutzt die Ferninteraktionseinheit 6 einen (nicht näher dargestellten) Bluetooth-Transceiver des Smartphones 28 zur drahtlosen Kommunikation, d.h. zum Datenaustausch mit dem Hörgerät 4 über eine in Fig. 1 angedeutete drahtlose Signal- oder Kommunikationsverbindung 30 (Bluetooth-Verbindung) mit dem Transceiver 17.

Über eine weitere drahtlose oder drahtgebundene Datenkommunikationsverbindung 32, beispielsweise auf Basis des IEEE 802.11-Standards (WLAN) oder eines Mobilfunkstandards, z.B. LTE, ist die Ferninteraktionseinheit 6 weiterhin mit einer im Internet angeordneten Datenwolke (Cloud) 34 verbunden, in der eine Datenbank 36 installiert ist. Die Datenbank 36 kann auch ein mit der Datenwolke 34 gekoppelter Server sein. Für den Datenaustausch mit der Datenbank 36 greift die Ferninteraktionseinheit 6 auf eine (ebenfalls nicht explizit dargestellten) WLAN- oder Mobilfunk-Schnittstelle des Smartphones 28 zu.

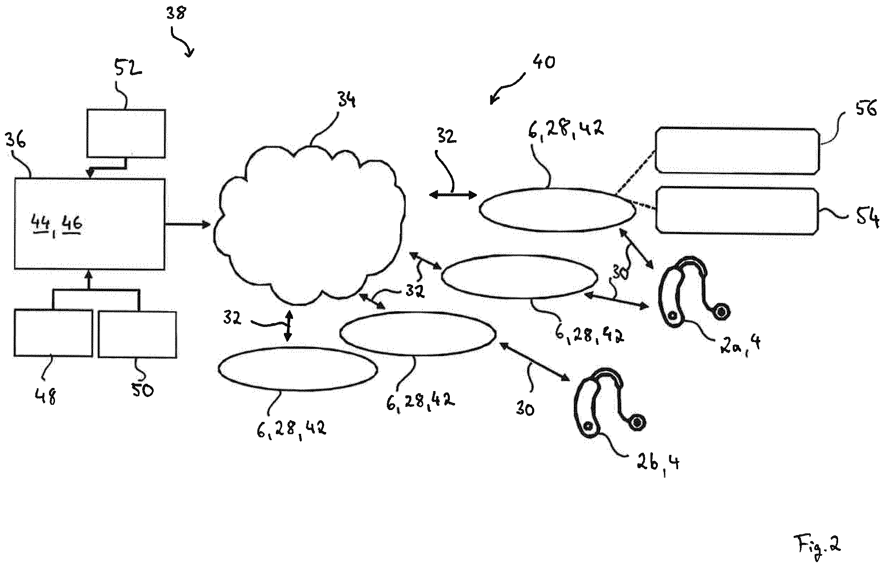

Nachfolgend ist eine Vorrichtung 38 und ein Verfahren zum Betrieb des Hörsystems 2 anhand der Fig. 2 näher erläutert.

Die Vorrichtung 38 umfasst ein Netzwerk 40 mit der Datenwolke 34 und einer Anzahl von damit gekoppelten dezentralen Netzwerkknoten 42. Die Netzwerkknoten 42 sind hierbei im Wesentlichen durch eine Anzahl von Ferninteraktionseinheiten 6 gebildet, welche somit als datenübertragungstechnische Schnittstelle zu Hörsystemen 2 bilden.

Die Netzwerkknoten 42 oder Ferninteraktionseinheiten 6 sind vorzugsweise als eine Netzwerkknoten-App auf Smartphones, Tablets, Router, etc. installiert, wobei in der Fig. 2 beispielhaft vier Smartphones 28 mit Ferninteraktionseinheiten 6 als Netzwerkknoten 42 gezeigt sind.

Das Netzwerk 40 ist dazu vorgesehen und eingerichtet automatisch mit einem Hörsystem 2 zu verbinden. Es wird also automatisch eine Datenverbindung zwischen der Datenwolke 34 und der Signalverarbeitungseinheit 12 hergestellt.

Die Sucheinheit 27 des Hörsystems 2 startet mit einer einstellbaren Wiederholungsrate automatisch eine Suche nach einem dezentralen Netzwerkknoten 42. Mit anderen Worten wird der Transceiver 17 aktiviert, und versucht das Hörsystem 2 mit dem Netzwerk 40 zu verbinden.

Bei einer erfolgreichen Suche, also wenn im Zuge der Suche zumindest ein dezentraler Netzwerkknoten 42 des Netzwerks 40 in der Umgebung des Hörgeräts 4 gefunden wird, wird das Hörsystem 2 beziehungsweise das Hörgerät 4 automatisch mit dem Netzwerk 40 verbunden. Anschließend wird automatisch ein (vorzugsweise verschlüsselter) Datenaustausch über die Kommunikationsverbindung 30 zwischen dem Hörgerät 4 und dem Netzwerk 40 beziehungsweise dem mindestens einen Netzwerkknoten 42 durchgeführt. Nach dem Datenaustausch wird die Kommunikationsverbindung 30 vorzugsweise automatisch von dem Hörgerät 4 beendet, beispielsweise durch ein Abschalten des Transceivers 17.

Nach einer erfolgreichen oder nicht erfolgreichen Verbindung zu einem dezentralen Netzwerkknoten 42 wird automatisch nach einer einstellbaren Zeitdauer eine erneute Suche beziehungsweise ein erneuter Verbindungsversuch gestartet. Die Wiederholungsrate oder die Zeitdauer bis zu einem erneuten Auslösen einer Suche kann beispielsweise in Abhängigkeit einer Situation eingestellt werden. Vorzugsweise wird die Wiederholungsrate in Abhängigkeit einer Verbindungshäufigkeit (bzw. Datenaustauschhäufigkeit) eingestellt. Beispielsweise wird von dem Hörsystem 2 während des Betriebs ein Maß für die Zeitdauer seit der letzten (erfolgreichen) Verbindung mit einem Netzwerkknoten 42 bestimmt, wobei die Wiederholungsrate in Abhängigkeit dieses Maßes eingestellt wird. Vorzugsweise wird die Wiederholungsrate mit zunehmender Zeitdauer seit der letzten Verbindung erhöht, das Hörsystem 2 versucht also häufiger sich mit einem Netzwerk 40 zu verbinden, wenn die letzte erfolgreiche Verbindung schon längere Zeit zurück liegt.

Die Wiederholungsrate für die Suche kann auch in Abhängigkeit eines Tragezustands eingestellt werden. Beispielsweise sucht das Hörgerät 4 häufiger nach dem Netzwerk 40 beziehungsweise den dezentralen Netzwerkknoten 42, wenn es vom Benutzer getragen oder verwendet wird.

Es können mehrere Hörsysteme 2 oder Hörgeräte 4 parallel mit dem Netzwerk 40 verbunden sein. In der Fig. 2 sind beispielsweise zwei Hörsysteme 2a, 2b beziehungsweise Hörgeräte 4 mit der Datenwolke 34 verbunden.

In der Datenbank 36 sind Hörgeräteidentifikationen oder Identifikationsdaten (ID-HA) 44 sowie ein jeweils zugeordneter Hörgerätestatus beziehungsweise entsprechende Statusdaten 46 hinterlegt. Der Hörgerätestatus oder die Statusdaten 46 ist hierbei beispielsweise ein HaaS-Status für eine von der Signalverarbeitungseinrichtung 12 realisierbare (Hörgeräte-/Signalverarbeitungs-)Funktion.

Als Statusdaten 46 kann beispielsweise auch eine Tragedauer des Hörgeräts 4 seit der letzten Reinigung in der Datenbank 36 hinterlegt sein, wobei in Abhängigkeit von der Tragedauer eine Reinigungsaufforderung als Handlungsempfehlung über die Kommunikationsverbindung 32 an die Endpunkte 42 gesendet wird.

Teil der Statusdaten 46 können auch Aktivierungsdaten 48 sein, welche beispielsweise angeben, ob ein Abonnement für eine Haas-Funktion des Hörgeräts 4 beziehungsweise der Signalverarbeitungseinheit 12 aktiv ist (Status "no kill") oder ob das Abonnement abgelaufen ist (Status "kill").

Zusätzlich sind in der Datenbank beispielsweise Informationen oder Daten 50von einem Gesundheitsexperten, also beispielsweise die Hörgeräteeinstellungen oder Anpassungen (Fitting-Parameter), für das jeweilige Hörgerät 4 beziehungsweise den jeweiligen Hörgerätenutzer hinterlegt. Die Datenbank 36 weist beispielsweise ebenfalls Informationen oder Daten 52 auf, ob der Hörgeräteidentifikation ein freiverkäufliche bzw. rezeptfreie Hörgerät, also ein sogenanntes OTC-Hörgerät (engl: Over the Counter, OTC) zugeordnet ist.

Das dezentrales Netzwerk 40 wird verfahrensgemäß für eine Hörgeräte-Ferninteraktion und Datenübertragung verwendet. Dabei wird typischerweise ein Hörsystem 2 oder Hörgerät 4 nach einer erfolgreichen Suche mit mindestens einem der dezentralen Netzwerkknoten 42 verbunden. Diese dezentralen Netzwerkknoten 42 übertragen Daten vom jeweiligen Hörgerät 4 zur Datenwolke 34 und umgekehrt.

Dies ermöglicht beispielsweise ein einfaches "Ausschalten" (Status "kill") oder "Wiederbeleben" (Status "no-kill") von Haas-Funktionen ohne zusätzliche eingebaute Uhr oder andere Datenerfassungsschaltungen innerhalb des Hörgeräts 4, wodurch zeitgebundene und ferngesteuerte Dienste (HaaS, Standortverfolgung usw.) einfach und ohne Compliance der Hörgerätenutzer realisiert werden können.

Die Endpunkte oder Netzwerkknoten 42 suchen vorzugsweise ebenfalls automatisch nach Hörgeräten 4 und stellen eine Verbindung zu ihnen her, um sie anhand der im Hörgerät 4 jeweils hinterlegten Identifikation (HA-ID) zu identifizieren und Daten zu übermitteln (z. B. Befehle zum "Ausschalten"/"Wiederbeleben" von Hörgeräten, Auslesen von Daten, vorbeugende Wartung).

In dem Ausführungsbeispiel der Fig. 2 sind zwei Hörsysteme 2a, 2b oder Hörgeräte 4 mit dem Netzwerk 40 verbunden. Das erste Hörgerät 4 hat beispielsweise die Identifikation ID-HA3 und ist mit zwei Netzwerkknoten 42 verbunden, wobei das andere Hörgerät 4 die Identifikation ID-HA4 aufweist und lediglich mit einem Netzwerkknoten 42 gekoppelt ist. Bei einer Verbindung der Hörgeräte 4 mit dem Netzwerk 40 werden automatisch die jeweiligen Identifikationen oder Informationsdaten von dem Hörgerät 4 oder Hörsystem 2a, 2b über die Kommunikationsverbindungen 30, 32 an die Datenwolke 34 übertragen, und mit den hinterlegten Identifikationsdaten 44 verglichen.

In der Datenbank 36 ist hierbei beispielsweise hinterlegt, dass das Hörgerät 4 mit der Identifikation ID-HA3 den Hörgerätestauts "no-kill" hat, und dass das Hörgerät 4 mit der Identifikation ID-HA4 den Hörgerätestatus "kill" hat. Die Datenwolke 34 sendet somit einen entsprechende Freigabe oder Einschaltbefehl an das Hörgerät 4 mit der Identifikation ID-HA3 (Hörsystem 2a), und entzieht eine Freigabe oder sendet einen Ausschaltbefehl an das Hörgerät 4 mit der Identifikation ID-HA4 (Hörsystem 2b). Zumindest die Verbindung 30 zum Hörgerät 4 verfügt hierbei vorzugsweise über einen Autorisierungsmechanismus (Blockchain und Verschlüsselung).

In bevorzugter Ausgestaltung sind die Informationen der Datenbank 36 zumindest teilweise in den Ferninteraktionseinheiten 6 beziehungsweise Netzwerkknoten 42 (zwischen-)gespeichert oder speicherbar, um auch im Falle einer zeitweisen Unterbrechung der Kommunikationsverbindung 32 eine Ansteuerung der Hörgeräte 4 zu realisieren. Für das Verfahren ist es daher nicht notwendig, dass die Kommunikationsverbindungen 30 und 32 gleichzeitig bestehen. Die Datenübertragung oder der Datenaustausch über die Kommunikationsverbindungen 30 und 32 kann auch zeitlich versetzt zueinander erfolgen.

Beispielsweise ist eine Offline-Liste 54 der "Ausschalten"-Geräte, die in einer beliebigen App gespeichert ist, in dem Netzwerkknoten 42 hinterlegt. Mit anderen Worten umfasst die Offline-Liste 54 auch die Aktivierungsdaten 48. Dadurch kann bei einem Datenaustausch mittels der Kommunikationsverbindung 30 - auch ohne gleichzeitig aktive Kommunikationsverbindung 32 - Haas-Funktionen des Hörgeräts 4 mittels der Aktivierungsdaten 48 der Offline-Liste 54 aktiviert oder deaktiviert werden.

Weiterhin können bei einer Kommunikationsverbindung 32 mit der Datenwolke 34 Informationen 56 in dem Netzwerkknoten 42 hinterlegt werden. Eine denkbare Information 56 ist hierbei beispielsweise eine Änderung der Fitting-Parameter, welche auf das Hörgerät 4 übertragen werden kann.

Bei einer ausreichenden Kapazität des Netzwerks 40 ist es weiterhin möglich, mehr Daten zu übertragen, so dass andere Anwendungen wie Fehler- und Fehlfunktionsberichte des Hörgeräts 4, automatischer Austausch oder Firmware-Update realisiert werden können. In der Datenwolke 34 können für die Hörgeräte 4 oder Identifikationen auch verschiedene Profile für Dienste und Datenzugriff über das Remote-Netzwerk ermöglicht werden, z.B. ein Hausmeistermodus (Pflegeheim - Status auslesen, LED & Batterie Check, ...).

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2, 2a, 2b: Hörsystem
- 4: Hörgerät
- 6: Ferninteraktionseinheit
- 8: Gehäuse
- 10: Eingangswandler
- 12: Signalverarbeitungseinheit
- 13: Controller
- 14: Ausgangswandler
- 16: Batterie
- 17: Transceiver
- 18: Audiosignal
- 20: Audiosignal
- 22: Schallkanal
- 24: Spitze
- 26: Energie
- 27: Sucheinheit
- 28: Smartphone
- 30: Kommunikationsverbindung
- 32: Kommunikationsverbindung
- 34: Datenwolke
- 36: Datenbank
- 38: Vorrichtung
- 40: Netzwerk
- 42: Netzwerkknoten
- 44: Identifikationsdaten
- 46: Statusdaten
- 48: Aktivierungsdaten
- 50: Daten
- 52: Daten
- 54: Offline-Liste
- 56: Information

## Patentansprüche

1. Verfahren zum Betreiben eines Hörsystems (2, 2a, 2b), aufweisend ein Netzwerk (40) mit zumindest einem dezentralen Netzwerkknoten (42),
- wobei von dem Hörsystem (2, 2a, 2b) automatisch eine Suche nach einem dezentralen Netzwerkknoten (42) gestartet wird,
- bei welchem das Hörsystem (2, 2a, 2b) bei einer erfolgreichen Suche automatisch mit zumindest einem dezentralen Netzwerkknoten (42) verbunden wird,
- wobei automatisch ein Datenaustausch zwischen dem Hörsystem (2, 2a, 2b) und dem mindestens einem dezentralen Netzwerkknoten (*42*) durchgeführt wird.

2. Verfahren nach Anspruch 1,
**dadurch gekennzeichnet,**
**dass** nach dem Datenaustausch die Verbindung zwischen dem Hörsystem (2, 2a, 2b) und dem mindestens einen dezentralen Netzwerkknoten (42) beendet wird.

3. Verfahren nach Anspruch 1 oder 2, wobei das Netzwerk (40) eine Datenwolke (34) aufweist,
**dadurch gekennzeichnet,**
**dass** Daten von der Datenwolke (34) auf den mindestens einen dezentralen Netzwerkknoten (42) hinterlegt werden, wobei die Daten im Zuge des Datenaustauschs an das Hörsystem (2, 2a, 2b) übermittelt werden.

4. Verfahren nach einem der Ansprüche 1 bis 3,
**dadurch gekennzeichnet,**
**dass** bei dem Datenaustausch Aktivierungsdaten (48) ausgetauscht werden, und wobei Funktionen des Hörsystems (2, 2a, 2b) in Abhängigkeit der ausgetauschten Aktivierungsdaten (48) aktiviert oder deaktiviert werden.

5. Verfahren nach einem der Ansprüche 1 bis 4,
**dadurch gekennzeichnet,**
**dass** bei dem Datenaustausch Statusdaten (46) über einen Status des Hörsystems (2, 2a, 2b) von dem Hörsystem (2, 2a, 2b) an den mindestens einen Netzwerkknoten (42) übertragen werden.

6. Verfahren nach einem der Ansprüche 1 bis 5,
**dadurch gekennzeichnet,**
**dass** das Hörsystem (2, 2a, 2b) mit einer einstellbaren Wiederholungsrate automatisch eine Suche nach einem dezentralen Netzwerkknoten (42) startet.

7. Verfahren nach Anspruch 6,
**dadurch gekennzeichnet,**
**dass** während des Betriebs von dem Hörsystem (2, 2a, 2b) ein Maß für die Zeitdauer seit der letzten Verbindung mit einem Netzwerkknoten (42) bestimmt wird, wobei die Wiederholungsrate in Abhängigkeit dieses Maßes eingestellt wird.

8. Verfahren nach Anspruch 6 oder 7,
**dadurch gekennzeichnet,**
**dass** die Wiederholungsrate in Abhängigkeit eines Tragezustands des Hörsystems (2, 2a, 2b) eingestellt wird.

9. Hörsystem (2, 2a, 2b) aufweisend ein Hörgerät (4) mit einer Sucheinheit (27) zur Suche nach einem dezentralen Netzwerkknoten (42), mit einem Transceiver (17) zur signaltechnischen Verbindung mit einem dezentralen Netzwerkknoten (42), und mit einem Controller (13) zur Durchführung eines Verfahrens nach einem der Ansprüche 1 bis 8.

10. Software auf einem Datenträger zur Durchführung eines Verfahrens nach Anspruch 1, wenn die Software auf einem Computer abläuft.

11. Verwendung eines Verfahren nach einem der Ansprüche 1 bis 9 zur Lokalisierung des Hörsystems (2, 2a, 2b).
